Europäisches Patentamt

European Patent Office

Office européen des brevets

(11) Publication number: **0 055 553**
**B1**

(12) **EUROPEAN PATENT SPECIFICATION**

(45) Date of publication of patent specification: **07.09.88**

(51) Int. Cl.⁴: **G 06 F 9/44,** G 06 F 9/22

(21) Application number: **81305916.9**

(22) Date of filing: **17.12.81**

(54) Information processor with initial programme loading.

(30) Priority: **29.12.80 JP 187950/80**

(43) Date of publication of application:
**07.07.82 Bulletin 82/27**

(45) Publication of the grant of the patent:
**07.09.88 Bulletin 88/36**

(84) Designated Contracting States:
**DE FR GB NL**

(56) References cited:
US-A-3 699 530

COMPUTER DESIGN, vol. 9, no. 10, October 1970, Concord (US) J.A. Howard et al.: "An ROM bootstrap loader for small computers", pages 95-97

COMPUTER DESIGN, vol. 10, no. 3, March 1971, Concord (US) G. SCHLITT : "Letters to the editor", page 16

ELECTRONIQUE ET APPLICATIONS INDUSTRIELLES, no. 261, December 1, 1978, Paris (FR), J.C. MATHON :"La banque de donnes microprocesseur", pages 29-31

(73) Proprietor: **FUJITSU LIMITED**
**1015, Kamikodanaka Nakahara-ku**
**Kawasaki-shi Kanagawa 211 (JP)**

(72) Inventor: **Mori, Shosuke**
**1-1, Soshigaya 2-chome Setagaya-ku**
**Tokyo, 157 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
- MICROPROCESSORS & MICROSYSTEMS, vol. 3, no. 10, December 1979, Surrey (GB), I.R. WHITWORTH: "Designing flexibility into memory systems", pages 435-441

IBM TECHNICAL DISCLOSURE BULLETIN, vol. 13, no. 3, August 1970, New York (US), S.B. WEXLER: "Initial program load from remote terminal", page 779

IEEE TRANSACTIONS ON MAGNETICS, vol. MAG-13, no. 5, September 1977, New York (US), A.H. BOBECK et al.:" Characterization and test results for a 272k bubble memora package", pages 1370-1372

## Description

The present invention relates to an information processor, such as a microcomputer, which has a plurality of initial program loaders (IPL) each serving to start a corresponding one of a number of different operation systems (OS's) after a central processing unit (CPU) has been reset or after a power supply has been turned "on".

Conventional microcomputers have only one sort of IPL mode, and can start only one sort of OS. In a case where it is desired to start one of a number of different OS's including, for example, those relating to a floppy disk, microdisk, digital cassette etc. after resetting the OS or after turning "on" a power supply, on such an occasion an operator manipulates the microcomputer.

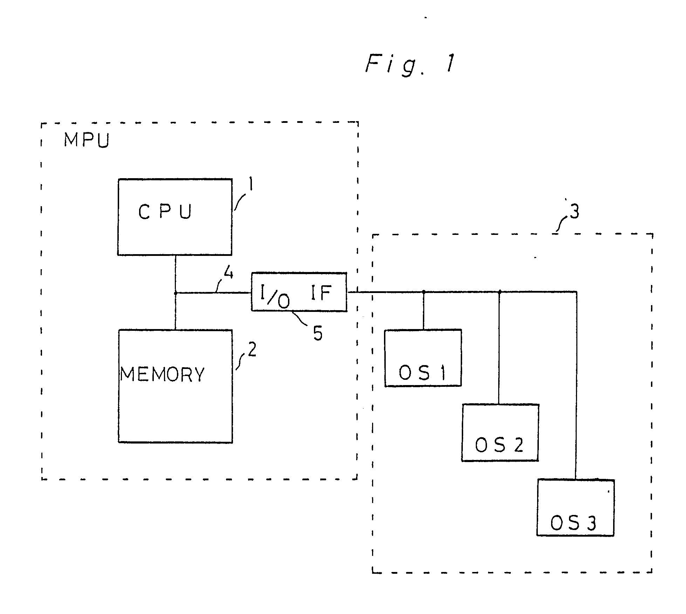

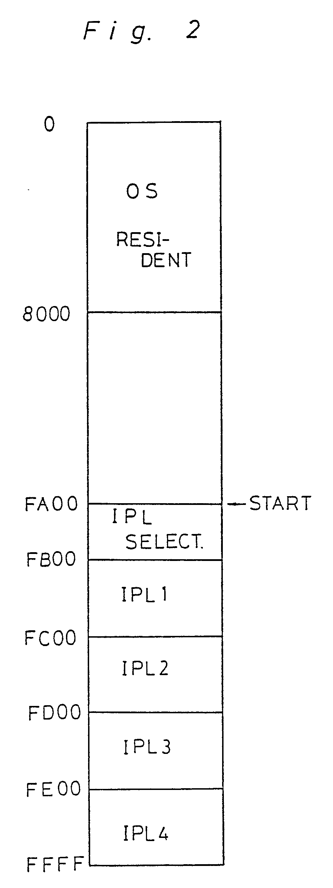

In general, as shown in Figure 1 of the accompanying drawings, which is a schematic block diagram, a computer system has an arrangement in which a microprocessor unit (MPU), having a CPU 1, a main memory 2, and an input/output interface (I/O IF) circuit 5, is connected to peripheral equipments 3. Interconnection between the microprocessor unit and the peripheral equipments 3 is established by way of buses 4 for addresses and data. The peripheral equipments 3 connected to the I/O IF 5 are, for example, a floppy disk (FD), a microdisk (MD), etc. In such a computer system, each of the peripheral equipments operates under a control perculiar thereto. After any peripheral equipment has been reset or after a power supply has been turned "on", the CPU 1 must execute an initial program loader (IPL) program in order to start the control peculiar to a peripheral equipment. Previously, such peculiar IPL records have been stored in the lower-bit address area of the main memory 2 in individually divided forms. The address space of the main memory 2 is illustrated in Figure 2.

When the power supply has been turned "on", the CPU 1 appoints a 16 bit address FFFE as a memory address by hardware means and fetches the corresponding memory content, which is "FA". Subsequently, it increments a program counter to a count value corresponding to an address FFFF and thus fetches the corresponding memory content which is "OO". A signal "FAOO" in a form in which the aforementioned two data contents are combined is put on an address bus so as to appoint (designate) the address FAOO of the main memory 2. Then, operations for selecting an IPL record are started.

As shown in Figure 2, a program for selecting any of the IPL records is stored beginning at the address FAOO. It is executed in order to select a predetermined IPL record. By way of example, in case in which a content IPL2 stored beginning at an address FCOO is to be fetched, this record IPL2 is moved to an OS area which lies in the upper-bit address part of the main memory 2. Thus, peripheral equipment 3 corresponding to the content IPL2 is initialised. With previous proposals, accordingly, all of the plurality of IPL programs peculiar to respective peripheral equipments have to be stored in the lower-bit part or ROM part of the main memory 2. Such an expedient for selecting an operation system OS1, OS2 or OS3 with a program involves the disadvantage that operating speed is low.

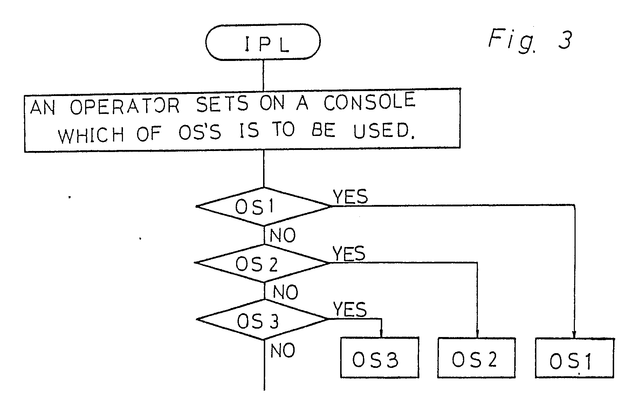

An alternative expedient is illustrated in Figure 3. After an IPL program has been loaded, that is to say, after an initial program has been stored into a main memory, an operator sets on a console which of OS's is to be used. Thus, an operation system, for example, OS1, OS2, or OS3 is selected with the program. In the presence of a plurality of IPL modes, accordingly, IPL programs which are equal in number to the modes must be stored in the ROM area of main memory, that is, as ROM contents. Therefore, the area of the main memory which the user can utilise ("0"∿"FAOO" is decreased to the extent that area of main memory is taken by by IPL programs.

Computer Design, volume 9, No. 10. October 1970, pages 95 to 97, and Computer Design, volume 10, No. 3, March 1971, page 16, relate to a ROM bootstrap loader for small computers. Electronique et Applications Industrielles, No. 261, December 1, 1978, pages 29 to 31, "La banque de données à microprocesseur", discloses a microprocessor based data base management system using paged data memory.

According to the present invention there is provided an information processor having a plurality of initial program loader (IPL) programs (IPL1 to IPL4), for execution by a central processing unit (CPU) of the processor when operation of the central processing unit is initiated, and operable respectively for loading desired execution programs into a first memory, comprising:

a second memory which is a ROM and which stores the plurality of IPL programs therein, some, lower address bit, address terminals of the second memory being connected to the central processing unit through an address bus, the central processing unit being operable to set address bits corresponding to the said some address terminals,

an IPL setting part, for selecting a desired one of the said plurality of IPL programs, including a plurality of switches connected in one-to-one correspondence with the remaining, upper address bit, address terminals of the second memory, the IPL setting part being operable to set address bits corresponding to said remaining address terminals, independently of address signals sent out by the central processing unit and independently of operation of the central processing unit,

and a common data bus for the central processing unit, the first memory and the second memory, outputs of the second memory being connected to the common data bus.

An embodiment of this invention can avoid the disadvantages of previous proposals, and can provide an information processor which can efficiently use a plurality of IPL (initial program loader) programs stored in a fixed memory and which permits respective OS's (operation systems) to be started independently of one another when a central processing unit has been reset or a power supply has turned "on".

One embodiment of this invention as claimed in Claim 1 provides an information processor having a plurality of initial program loader (IPL) programs for execution by a central processing unit when the operations of the central processing unit are initiated and which are operable to load desired execution programs into a memory; comprising a memory exclusively for IPL use which stores the plurality of IPL programs therein, some address terminals of the memory exclusively for IPL use being connected to the central processing unit through an address bus, the central processing unit setting address bits corresponding to the address terminals of the memory exclusively for IPL use connected thereto, and an IPL setting part operable for setting a desired one of the plurality of IPL programs, the remaining address terminals of the memory exclusively for IPL use being connected to said IPL setting part, the IPL setting part setting address bits corresponding to said remaining address terminals.

The present invention will now be described, by way of example only, with reference to the accompanying drawings in which:

Figure 1 is a schematic block diagram of a previously proposed computer system,

Figure 2 is a diagram schematically illustrating the address space of a main memory of the computer system of Figure 1,

Figure 3 is a flow diagram for assistance in explaining the operation of a previously proposed computer system,

Figure 4A is a circuit diagram of an information processor embodying the present invention,

Figure 4B is a more detailed diagram indicating connections in a part of the embodiment of the present invention shown in Figure 4A,

Figure 5 is a memory map diagram illustrating the address space of a main memory in the embodiment of the present invention shown in Figures 4A and 4B,

Figure 6 is a diagram for assistance in explaining an aspect of starting procedure for an operation system, used in the embodiment of the present invention shown in Figures 4A and 4B,

Figure 7 is a schematic diagram of a computer system embodying the present invention,

Figure 8 is a schematic block diagram illustrating in more detail a communication system part of the computer system of Figure 7,

Figure 9 is a circuit diagram illustrating a display system part of the computer system of Figure 7,

Figure 10 is a schematic block diagram illustrating a speech synthesis system in accordance with an embodiment of this invention,

Figure 11 is a block diagram illustrating the system of Figure 10 in more detail, and

Figures 12, 13 and 14 are block diagrams respectively illustrating a magnetic bubble memory and a magnetic bubble memory interface included in the system of Figure 10, and respective main parts of the system of Figure 10.

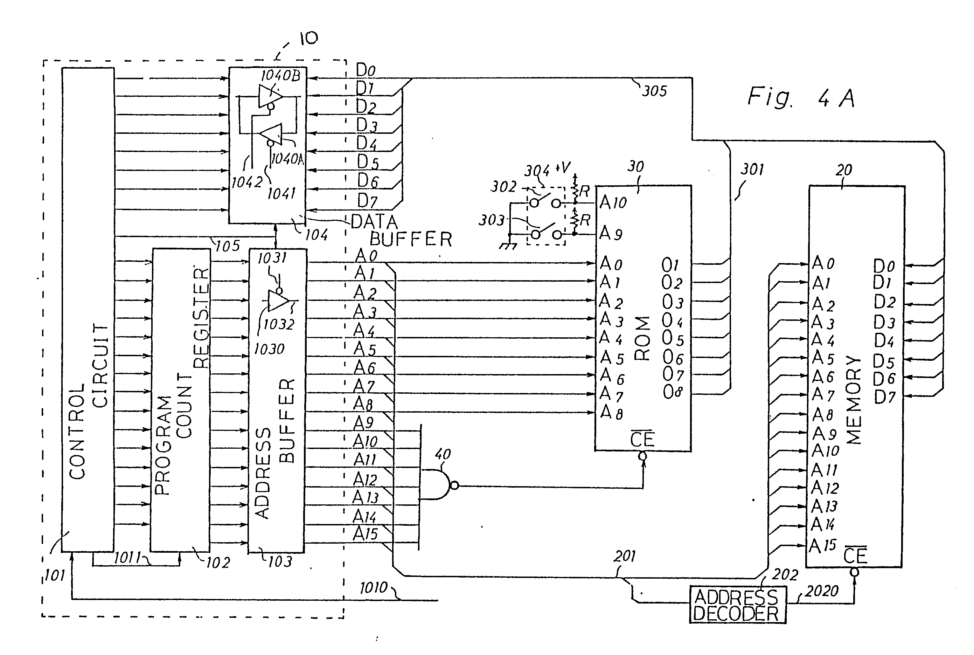

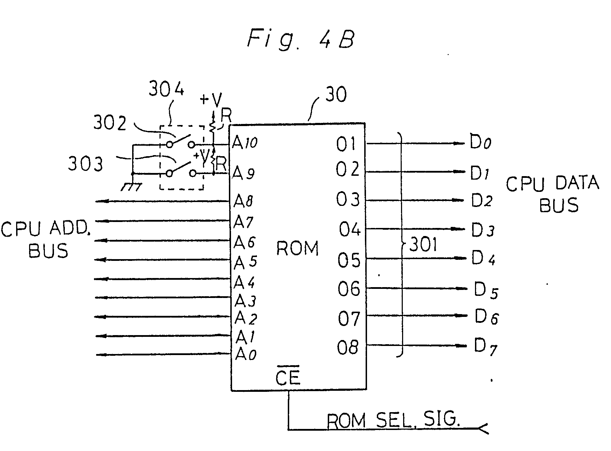

As shown in Figure 4A, an information processor embodying the present invention includes data lines $D_0$—$D_7$, for a 8-bit data, which connect a CPU 10 and a main memory 20, and a ROM 30 which is a fixed memory exclusively for IPL use and connected to address lines $A_0$—$A_{15}$. In this embodiment of the present invention, the ROM 30 exclusively for IPL use is composed of, for example, four memory areas each of which includes 512 bytes which bytes can be designated by the 9 bits of the address lines $A_0$—$A_8$ and which areas can be respectively designated by the 2 bits of the address lines $A_9$ and $A_{10}$. Thus, the ROM 30 has a total memory capacity of 512 bytes×4. One IPL record is stored in an area of 512 bytes, and four sorts of IPL programs (four different IPL programs) are stored in total. In the 16-bit address bus ($A_0$—$A_{15}$) which connects the CPU 10 and the main memory 20 (Figure 4A), the address lines $A_0$—$A_8$ of the lower 9 bits are directly connected to address inputs $A_0$—$A_8$ of the ROM 30 (Figure 4B). As shown in Figure 4B, the address inputs $A_9$ and $A_{10}$ of the IPL ROM 30 are connected to two IPL selection switches 302 and 303 disposed in an IPL selection part 304. The address input $A_{10}$, for example, is forced to become logic "0" when the switch 302 is turned "on", and is fed with a supply voltage V through a resistor R, and is forced to become logic "1", when the switch is turned "off". Accordingly, the four IPL records can be selected by utilizing the "on" and "off" states of the two switches 302 and 303. As will be seen from Figure 4A, a chip enable terminal $\overline{CE}$ of the IPL ROM 30 receives a signal obtained by decoding the 6 bits $A_9$—$A_{15}$ of the address bus by means of a decode circuit or NAND circuit 40. When the 7 bits of the lines $A_9$ to $A_{15}$ are "all 1's", a logic "1" is applied to the chip enable terminal $\overline{CE}$, and the IPL ROM 30 falls into the enabled state. This measure is taken in order that, when a signal of the address bus of 16 bits lies in a range of from FEOO to FFFF in terms of hexadecimal numbers, the IPL ROM 30 may be placed in the enabled state and have its content fetched onto a data line 301.

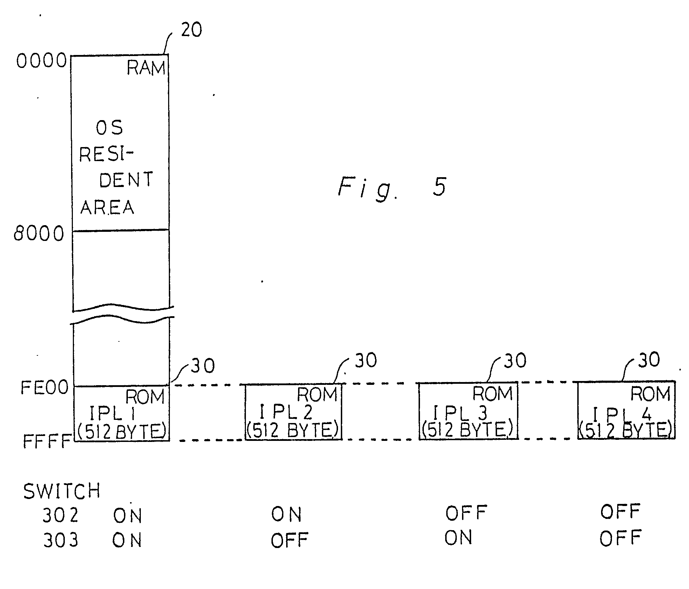

For the above embodiment of this invention, accordingly, a map of the memory space of the main memory 20 is as shown in Figure 5. In a case where ths 16-bit address bus is designating addresses FEOO to FFFF in the hexadecimal system, the ROM 30 exclusively for IPL use is chip-enabled instead of the content of the main memory 20 being designated, and data from the ROM 30 is effectively fetched onto the data line 301 in accordance with the 9 bits $A_0$—$A_8$ applied to the ROM 30.

The actual capacity of the ROM 30 which is the fixed memory exclusively for IPL use is 512×4 bytes. However, when the ROM is viewed from the CPU side, the address bits required for addressing the ROM are $A_0$—$A_8$, and hence, the ROM capacity is only 512 bytes when viewed from the CPU side (i.e. in terms of CPU address space). Any one of the four memory areas, which hold respective IPL records, each of 512 bytes, within the ROM 30 is selected by appropriately setting the upper bits $A_9$ and $A_{10}$ of the ROM 30 by means of the IPL setting part 304. Accordingly, the CPU is only required to designate addresses for the part of the IPL memory areas FEOO—FFFF which are kept fixed. This facilitates simple operation.

As shown in Figure 5, the present embodiment has four IPL programs, each of which consists of a maximum of 512 bytes. When the program IPL1 is to be fetched, the switches 302 and 303, are connected to the address lines $A_{10}$ and $A_9$ of the IPL ROM 30 as shown in Figure 4B, are both brought into the "on" state so as to apply logic (00) into the ROM 30 in advance. Then, the 512 bytes or 512 words of the ROM 30 are designated by lower-bit ($A_0$—$A_8$) addresses transmitted from the CPU 10, and the program content IPL 1 is fetched onto the data bus 301. Likewise, in the memory map of Figure 5, the initial programs IPL2, IPL3 and IPL 4 each consisting of 512 bytes (words) at maximum can be fetched by setting the switches 302 and 303 to ("on", "off"), ("off", "on" and ("off", "off"), respectively.

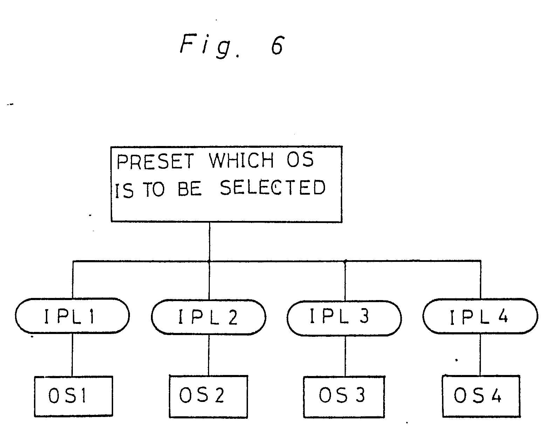

In the present embodiment, accordingly, any desired OS can be automatically started by presetting any of OS1, OS2, OS3 and OS4 in correspondence with the "on" and "off" states of the switches 302 and 303. This is illustrated in Figure 6.

Referring to Figure 4A again, the central processing unit (CPU) 10, which generates the address bit signals of the ROM 30 exclusively for IPL use, sets in a program counter register 102 16-bit address signals which are generated under the control of a control circuit 101 or by activating a program counter load signal 1011. The 16-bit address signals are sent out through a tristate type address buffer circuit 103 which is connected to the program counter register 102. As stated above, when the address bits $A_9$—$A_{15}$ are "all 1's", the IPL ROM 30 is enabled by the NAND circuit 40, and one of the four IPL programs, each consisting of 512 bytes at most, is set by the IPL setting part 304, and the contents of the IPL program designated by the address bits $A_0$—$A_8$, being the outputs of the address buffer circuit 103 of the CPU 10, are delivered onto the data line 301. These contents pass along a data bus 305 and are sent through a data buffer circuit 104 of the CPU 10 to the control circuit 101, in which the predetermined IPL operation is executed. The control circuit 101 effects control by the use of buffer control signals 105 for the data buffer circuit 104 and the address buffer circuit 103. This control will be discussed below with respect to one tristate buffer circuit 1030 in the address buffer circuit 103. When an enable terminal 1031 is brought to logic "1", an output line 1032 (of the address buffer circuit 103) connected to one of the 16-bit address lines falls into its high impedance state. On the other hand, when the control terminal 1031 is brought to logic "0", the address buffer circuit 1030 falls into its enabled state and permits the content of the corresponding bit of the program counter register 102 to be transmitted to the corresponding one of the address lines $A_0$—$A_{15}$.

Regarding the data buffer circuit 104, a buffer circuit 1040 included therein in correspondence with one data bit comprises an input buffer circuit 1040A for controlling the input of data and an output buffer circuit 1040B for controlling the output of data. When placing 8-bit data $D_0$—$D_7$ into the CPU, an enable terminal 1041 of the input buffer circuit 1040A is brought to logic "0" and an enable terminal 1042 of the output buffer circuit 1040B to logic "1" by the use of the buffer control signal 105. Then, data is fed into the CPU through the input buffer circuit 1040A. Conversely, when it is desired to feed data out of the CPU, the enable terminal 1042 is brought to logic "0" and the enable terminal 1041 is brought to logic "1", to enable the buffer circuit 1040B and to disable the buffer circuit 1040A. Then, data sent from the control circuit 101 is transmitted onto the data bus 305 through the output buffer circuit 1040B.

In a case in which at least one of the address bits $A_9$—$A_{15}$ is logic "0", in other words, when the address sent from the CPU lies outside the range of from FEOO to FFFF, the ROM 30 exclusively for IPL is not accessed. In this case, the memory 20, which supports OS's and user's areas is accessed in such a way that the 16-bit ($A_0$—$A_{15}$) address signals sent from the CPU are transmitted to the memory 20 through an address bus 201. Then, for example, the content of the designated OS is fetched and applied to the CPU through the data bus 305. In addition, the memory 20, supporting OS and user areas, has its chip-enable state determined by a signal 2020 which is obtained by decoding appropriate bit information of the address bits $A_0$—$A_{15}$ by means of an address decoder 202. Further the control circuit 101 of the CPU 10 is reset and initialised by a reset signal 1010.

The foregoing embodiment of the present invention employs a ROM exclusively for IPL use, which brings about the benefit that in the main memory address space, whereas previous proposals have required memory areas IPL1—IPL4, or 512 words×4, in the embodiment of this invention, the address space of the main memory area required for the IPL records decreases to 512 bytes, from FEOO to FFFF.

Moreover, in a case in which it is desired to start any one of a number of different OS's after the CPU has been reset or after the power supply has been turned "on", the embodiment of the present invention is furnished with a plurality of IPL programs and allows the respective OS's to start independently of one another.

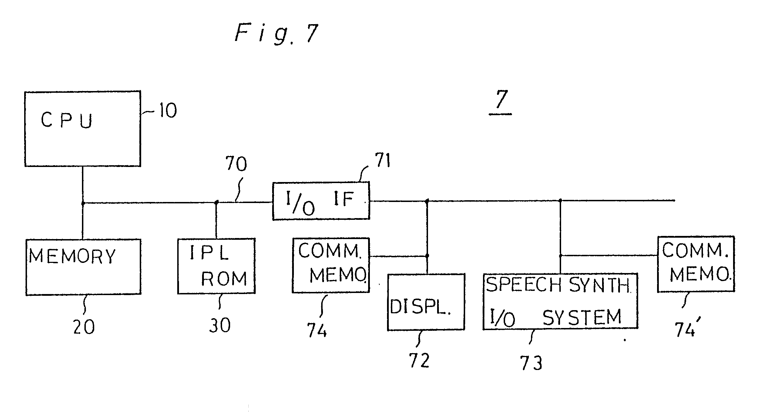

The address bus 201 and the data bus 301 and 305 which are coupled with the CPU 10 in the arrangement of Figure 4A correspond to a bus 70 in a computer system 7 illustrated in Figure 7 and embodying the present invention. Such buses are connected to, for example, a display unit 72 and a speech synthesis input/output system 73 through an input/output interface circuit 71. In the system of Figure 7, the IPL ROM 30 has, for example, four IPL programs as described above. Among those programs, a program IPL 1 is exclusively used for the display unit 72, and a program IPL 2 is exclusively used for the speech synthesis input/ output system 73. The central processing unit 10 needs to communicate in conformity with a predetermined communication system in order to exchange information with such peripheral equipment.

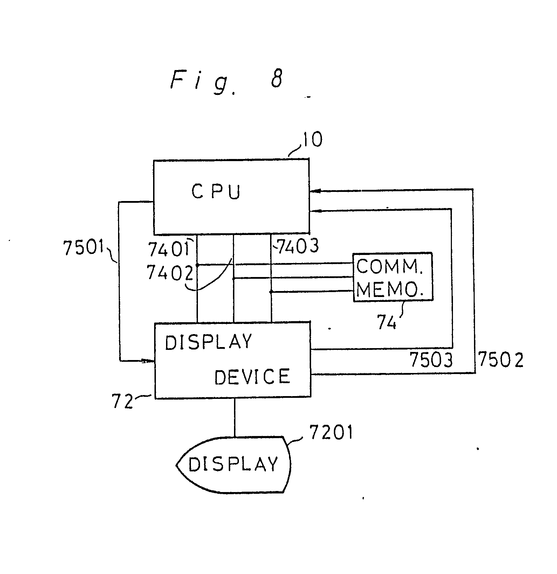

By way of example, in a case in which the display unit 72 is to be started, the CPU 10 first fetches the program IPL 1 from the ROM 30 and then works upon the display unit 72. Briefly, communications between the CPU 10 and the display unit 72 conform with a communication system as illustrated in Figure 8. In this communication system, a shared or common memory 74, which stores therein a plurality of commands, a plurality of data, a plurality of status signals and a plurality of error status signals, is used for the communications between the central processing unit 10 and the display unit 72. Thus, data transmission of comparatively high speed can be carried out without the necessity for an acknowledge signal to be issued after every transmission of 1 byte, and hardware can be simplified.

More specifically, in the computer system 7 which has the central processing unit 10 and peripheral equipments 72 and 73, common memories 74 and 74′ are connected between the central processing unit 10 and the peripheral equipments 72 and 73 through data lines, address lines, and control lines, and command signals, status signals, error status signals and data signals which are peculiar to the respective peripheral equipments are read and written by the use of the common memories, whereby communications between the central processing unit and the peripheral equipments are executed.

By adopting such communication systems based upon common memories, the CPU 10 can exchange information comparatively simply when starting the respective peripheral equipments by the use of the IPL programs fetched from the ROM 30 exclusively for IPL use.

As illustrated in Figure 8, the common memory 74 is disposed between the central processing unit 10 and the display unit 72. An address line 7401, a data line 7402 and a control line 7403 of the common memory 74 are connected to both the central processing unit 10 and the display unit 72. The central processing unit 10 and the display unit 72 are connected by a HALT signal line 7501, a BUSY signal line 7502 and an INTERRUPT signal line 7503.

The common memory 74 has its interior divided logically. For example, it includes an area for storing output instructions, an area for storing status signals indicative of the status of the display unit, and an area for storing error status signals. Accordingly, in order to send a certain data A from the central processing unit 10 to the display unit 72 and to display it on the latter, the central processing unit 10 appoints (designates) an address indicative of a write instruction in the common memory 74 and writes data into this common memory. Thereafter, the display unit 72 loads the data by appointing (designating) the same address of the common memory 74 and displays it on a display panel 7201.

When writing the data A, the logical status of a busy signal 7502, indicating whether or not the display unit 72 is in a busy condition, is first acknowledged. If the display unit 72 is in the ready status, that is, if it is in a status in which it is capable of loading data, the central processing unit 10 transmits a halt signal 7501 to the display unit 72 to bring the input/output part of the display unit 72, connected to the address line 7401, data line 7402, etc., into a high impedance state and then writes the data A into the common memory 74. Thereafter, the central processing unit 10 releases the halt signal 7501, and the display unit 72 loads the data from the common memory 74. Thus, the transmission of the data A from the central processing unit 10 to the display unit 72 is implemented.

In this manner, when transmitting data, communications between the central processing unit 10 and the common memory 74 are permitted upon applying the halt signal 7501 from the central processing unit 10 to the display unit 72. Accordingly, it becomes possible to transmit large quantities of data besides the data A, at one step, from the central processing unit 10 to the common memory 74. After the release of the halt signal 7501, the display unit 72 loads the large quantities of data from the common memory 74 and is thus allowed to display that data whilst loading irrespective of the jobs of the central processing unit 10. This means that the speed of data transmission be high.

An interrupt signal 7503, issued when the display unit 72 requests data, is a request signal for making an interrupt request of the central processing unit 10 to acknowledge whether or not data transmission between the central processing unit 10 and another peripheral equipment (for example, speech synthesis input/output system 73) or the job of the central processing unit 10 itself can be suspended, and to interrupt the central processing unit 10 so as to initiate data transmission thereof with the display unit 72. In order to inform the central processing unit 10 of the status or error status of the display unit 72, status information corresponding to various situations that can arise in the display unit 72 are stored in the status area or error status area of the common memory 74 in advance, and the address of the common memory 74 corresponding to information relating to a particular situation that has arisen is accessed from the display unit 72. A content of the memory 74 thus appointed (designated), that is, data representative of the specific situation is sent to the central processing unit 10. Alternatively, the central processing unit 10 is informed of the status of the display unit 72 in such a way that data representative of that status is first written into the common memory 74 by a command issued from the display unit 72 and then the central processing unit 10 fetches the written data.

When the display unit 72 is halted by a halt signal as described above, the central processing unit 10 can write data into the common memory 74. Therefore, the speed of the data transmission can be enhanced.

In accordance with recent developments towards decentralisation of functions within a computer system, peripheral equipment such as a display has increasingly been functionally enhanced by installing therein a processor for exclusive use thereby. By disposing the common memory 74 inside the display unit and organically coupling the former with the processor of the latter, the common memory 74 is permitted to be used multifariously.

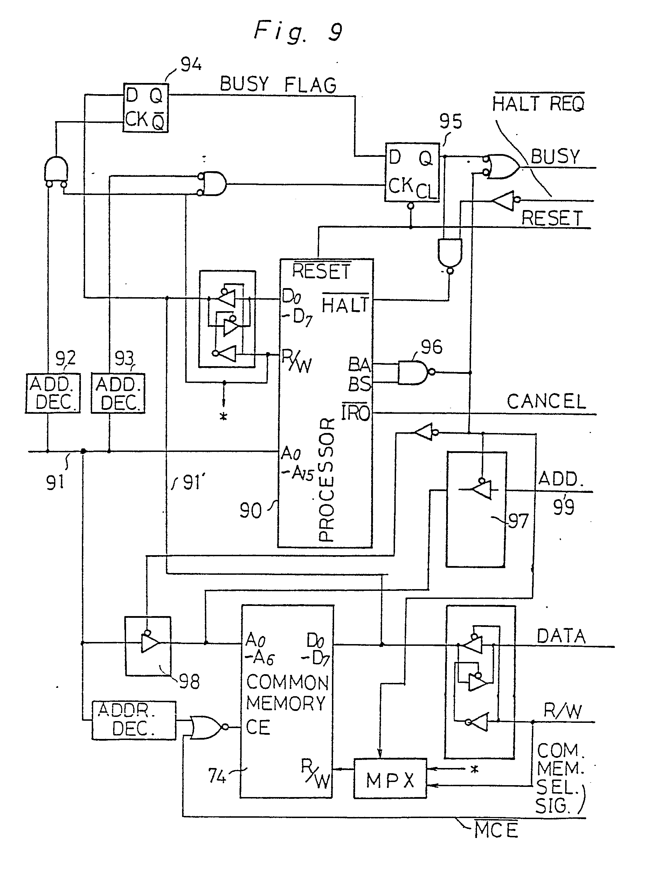

The details of an example of such a display system are illustrated in Figure 9. The display system has as its basic constituents an exclusive use processor 90 and a common memory 74 for storing communication information from a central processing unit. Further, the display system includes circuits for establishing control functions between itself and the central processing unit. When a reset signal $\overline{RESET}$ has become logic "0", the system is reset, and the processor 90 initiates a routine to clear the screen of, for example, a cathode-ray tube of the display system and also to clear registers for example. Then, the processor 90 awaits a command from the CPU. The address bits of an internal address bus 91 are decoded by address decoders 92 and 93. When flip-flops 94 and 95 are released from a busy signal BUSY, the display system falls into a ready status, and the CPU can access the common memory 74. In order to bring the processor 90 into a halt status, the CPU makes a signal $\overline{HALT\ REQ}$ logic "0". When halted, the processor 90 brings a bus available signal BA and a bus state signal BS to logic "1" and renders the output of NAND gate 96 "0". Thus, an address buffer 97 is put into the enabled status, and at the same time, an address buffer 98 for the internal address bus 91 is put into the disabled status. Then, address input lines $A_0$—$A_6$ of the common memory 74 receive an address 99 from the CPU. Herein, when a read/write signal R/W is in the read status, data DATA from the CPU is written into the common memory 74 and transmitted to the processor 90 through a data bus 91'. This data may be a command signal, a status signal and error status signal, a data signal or the like which is peculiar to the display system. When the halt signal is released, the address buffer 97 falls into the disabled status and the address buffer 98 into the enabled status, so that the address of the common memory 74 can be accessed from the processor 90. By accessing the common memory 74, the processor 90 can load thereinto the content of the common memory, i.e. the command signal or the status signal and can start an operation exclusive for the display system.

When a cancel signal CANCEL is applied to the processor 90, the display can be cancelled as an interrupt signal. Further, the chip enable terminal $\overline{CE}$ of the common memory 74 is supplied by a signal which is the OR product of a signal obtained by decoding information on the internal address bus 91 and a common memory select signal $\overline{MCE}$ transmitted from the CPU. Therefore, the common memory chip can be enabled from either side (CPU side or display system side).

When the memory 30 exclusively for IPL has a program IPL 2 for other peripheral equipment, for example the speech synthesis input/output system 73, fetched through the IPL setting circuit 304, the CPU 10 causes the system 73 to start.

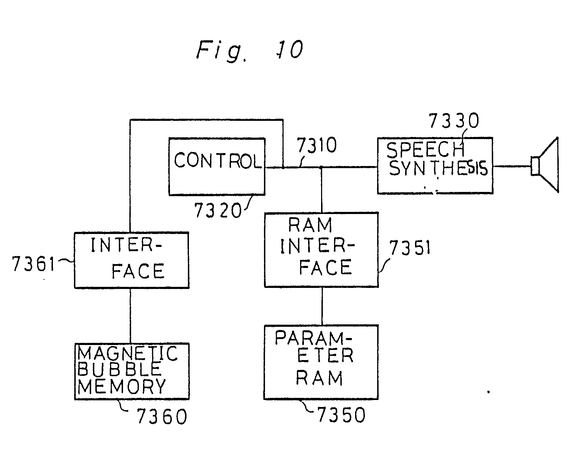

Figure 10 illustrates a speech synthesis input/ output system for use in an embodiment of the present invention. LSI control parts 7320 and speech or voice synthesis unit 7330 are connected to a data bus, an address bus and a control bus 7310, which are connected with a CPU 10. Further, a RAM 7350 for storing parameters therein is connected through an interface circuit 7351, and a magnetic bubble memory 7360 is connected through an interface circuit 7361.

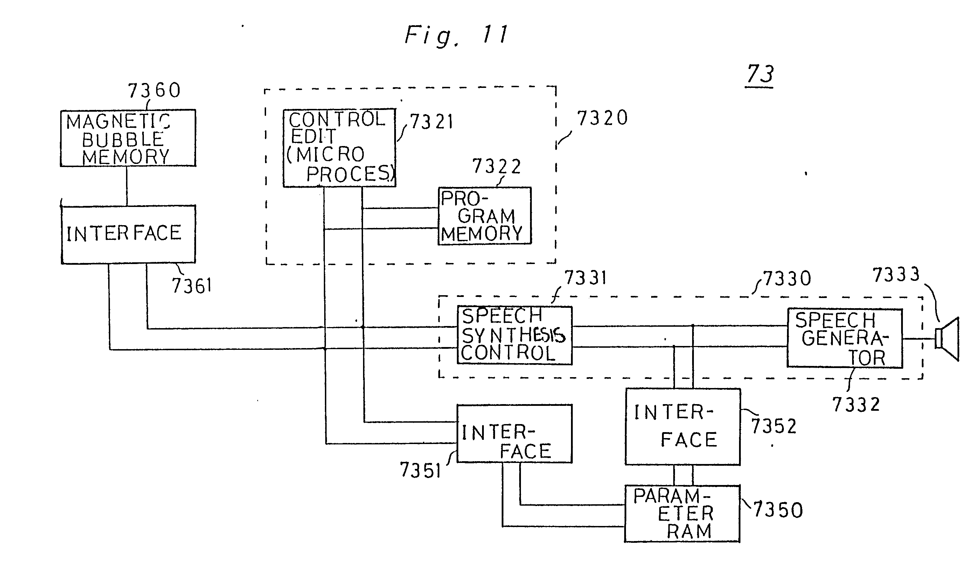

Figure 11 is a more detailed block diagram of the system of Figure 10. A microprocessor 7321 and a program memory 7322 for overall control and editing in the speech synthesis system are connected to the bus 7310. As stated above, the bus 7310 consists of a data bus, an address bus and a control bus. The speech synthesis unit 7330 comprises a speech synthesis control part 7331 and a speech generator 7332 connected with the former and these components are constituted by respective LSI's. The speech synthesis control part 7331 is connected to the bus 7310, and is controlled by a microprocessor 7321.

The bus 7310 is connected to the CPU 10, and the CPU 10 starts the speech synthesis system 73 by the use of the record IPL2. The magnetic bubble memory 7360 serves to store speech parameters therein, and is connected to the bus through the magnetic bubble memory interface 7361. The parameter RAM 7350 is connected to the bus through the parameter RAM interface circuit 7351, and is also connected to the speech synthesis unit 7330 through a speech synthesis RAM interface circuit 7352. The output of the speech generator 7332 is connected to a loudspeaker 7333.

In such speech synthesis system having a magnetic bubble memory 7360 and a parameter RAM 7350, the parameters required for synthesising, for example, the Japanese language are kept stored in the magnetic bubble memory 7360. Parameters are fetched from the magnetic bubble memory 7360 which relate to monosyllables which together constitute a sentence indicated by the editing part 7320 (comprising parts 7321 and 7322), and are transmitted to the parameter RAM 7350 in the sequence in which they construct the sentence. At the end of the transmission, the control part 7320 starts the speech synthesis unit 7330 and thus provides synthesised sound.

As described above, the control and editing part 7321 is constituted by a microprocessor. In accordance with words applied from the CPU 10 and information on the pitches thereof, the microprocessor fetches parameters relating to respective monosyllables in the sequence in which they are to be used. It increases or decreases the frequencies of the parameters, and writes the resulting parameters into the parameter RAM 7350. After the microprocessor has written all the necessary parameters into the RAM, it starts the speech generator 7332 so as to emit speech.

The illustrated system employs a magnetic bubble memory for storage of speech parameters, in contrast to previous proposals which have used ROM or magnetic disk. The speech of any desired word can be produced using the magnetic bubble memory and any desired speech sound can be generated with good quality as compared with previously used ROM, in a system which is very compact and inexpensive as compared with previously used magnetic disk. That is, the illustrated system comprising a microcomputer, a magnetic bubble memory and a speech synthesis system in combination can be made smaller in size than previous proposals using a minicomputer, a magnetic disk and a speech synthesis system in combination.

In general, previously proposed methods for storing parameters in ROM cannot provide a change in intonation of synthesised speech. In contrast, with a device in which the parameters are rewritable, as in the case of Figure 11, pitches can be changed by rewriting parts of the parameters, and hence, the intonation can be changed. The program memory in Figure 11 may be either a ROM in which a program is written, or a RAM which develops a program stored in the magnetic bubble memory.

The system of Figure 11 combines a speech synthesis unit 7330, a parameter RAM 7350 and a magnetic bubble memory 7360 which, if necessary can be provided in the form of a cassette, and can provide a speech synthesis system which can intonate any desired word and then emit the intonated word. Not only any desired sentence, but also fixed sentences having variations can be generated merely by replacing the magnetic bubble memory cassette.

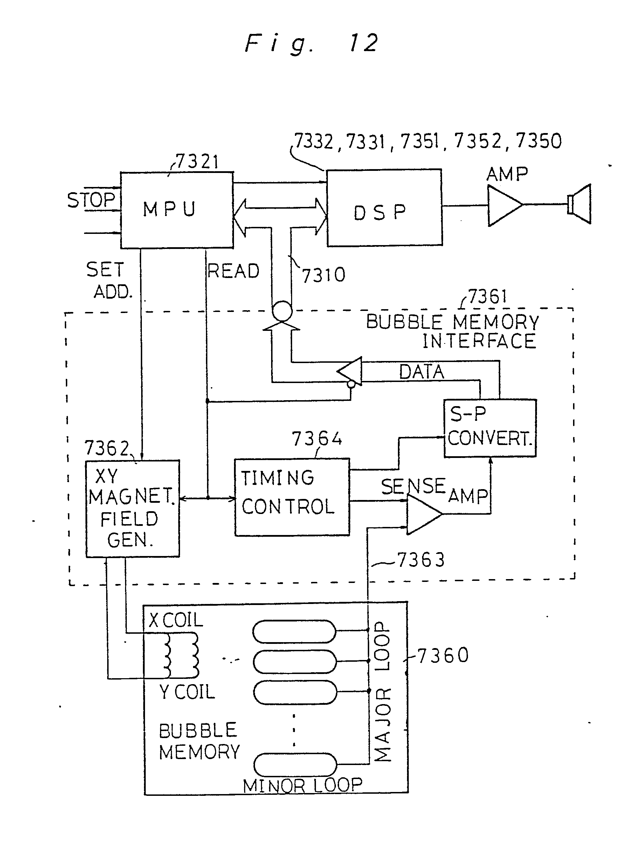

The magnetic bubble memory 7360 and the magnetic bubble memory interface circuit 7361 in the speech synthesis system illustrated in Figure 11 are shown in more detail in Figure 12. When the microprocessor 7321 functioning as the control and edition part supplies the bubble memory interface circuit 7361 with a signal appointing (designating) an address of the bubble memory 7360, a magnetic field generator circuit 7362 operates in the interface 7361 and causes X- and Y-coils of the bubble memory device 7360 to generate magnetic fields. When the memory content of the bubble memory device designated by the X- and Y-coils is fetched onto an output line 7363, it is subjected to a serial-parallel conversion at a suitable timing by a control signal from a timing control circuit 7364 which is controlled by the microprocessor 7321, whereupon the converted data is fetched onto the data bus 7310.

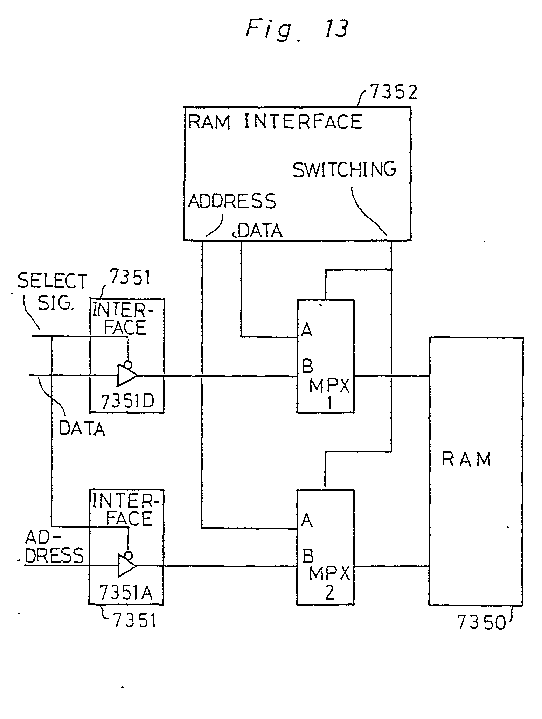

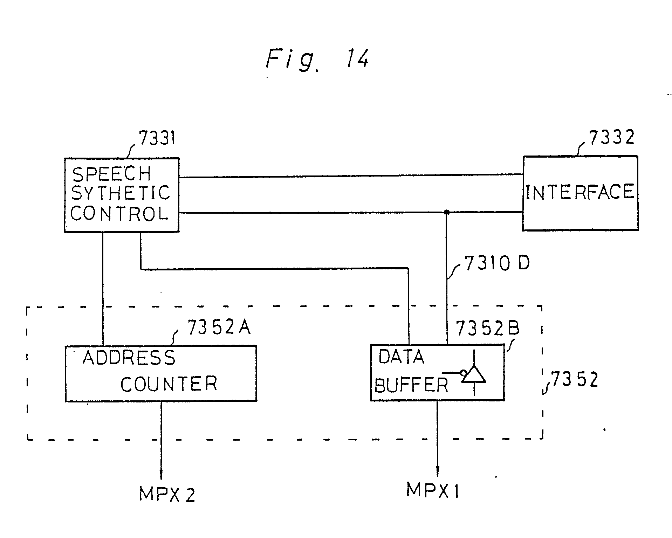

The details of the parameter RAM 7350 and circuits in the vicinity thereof are shown in Figures 13 and 14. The speech synthesis RAM interface 7352 sets an address, sent from the speech synthesis control part 7331, into an address counter 7352A and thereafter sends the address to the input A of a multiplexer MPX 2. With regard to data, data on a data bus 7310D is sent to the input A of a multiplexer MPX 1 through a data buffer 7352B included in the RAM interface 7352. At this time, the enabling or disabling of the buffer 7352B, to determine whether or not data is passed, is controlled by the speech synthesis control part 7331.

The input B of the multiplexer MPX 1 receives data from the data bus 7310 through a buffer circuit 7351D disposed in the parameter RAM interface 7351. Similarly, the input B of the multiplexer MPX 2 receives address information of the address bus 7310 through a buffer circuit 7351A disposed in the parameter RAM interface 7351.

In response to a switching signal issued from the RAM interface 7352, the multiplexer MPX 1 receives either the input A or the input B and delivers an output which becomes an address signal for the parameter RAM 7350. In response to the switching signal from the RAM interface 7352, the multiplexer MPX 2 receives either the input A or the input B and is coupled with the write data line of the parameter RAM 7350.

An embodiment of the present invention provides an information processor with a ROM memory which stores a plurality of initial program loader (IPL) programs. The ROM memory has address inputs for accessing each IPL program, which address inputs are divided into two parts. One part of the address inputs of the ROM memory is connected to an address bus from a central processing unit (CPU) for use in accessing contents of a IPL program. The other part of the address inputs of the ROM memory is connected to an IPL setting part which sets and selects a desired one of the plurality of IPL programs. The setting part includes a plurality of switches connected to upper bit terminals of the ROM address inputs.

## Claims

1. An information processor having a plurality of initial program loader (IPL) programs (IPL1 to IPL4), for execution by a central processing unit (CPU) of the processor when operation of the central processing unit is initiated, and operable respectively for loading desired execution programs into a first memory (20), comprising:
a second memory (30) which is a ROM and which stores the plurality of IPL programs therein, some, lower address bit, address terminals ($A_0$ to $A_8$) of the second memory being connected to the central processing unit through an address bus, the central processing unit being operable to set address bits corresponding to the said some address terminals,

an IPL setting part, for selecting a desired one of the said plurality of IPL programs, including a plurality of switches (302, 303) connected in one-to-one correspondence with the remaining, upper address bit address terminals $(A_9, A_{10})$ of the second memory (30), the IPL setting part being operable to set address bits corresponding to the said remaining address terminals, independently of address signals sent out by the central processing unit and independently of operation of the central processing unit

and a common data bus (305, 301) for the central processing unit, the first memory (20) and the second memory (30), outputs of the second memory (30) being connected to the common data bus (305, 301).

2. An information processor as claimed in claim 1, wherein the number of the said switches (302, 303) and the number of the said upper address bit address terminals $(A_9, A_{10})$, corresponds to the number of peripheral equipments subject to control by the processor.

3. An information processor as claimed in claim 2, wherein the IPL programs corresponding to respective peripheral equipments.

4. An information processor as claimed in claim 2 or 3, wherein communication between the CPU and peripheral equipment is established by way of a common memory (74, 74'), through which command signals, status signals, error status signals and data signals are passed between the CPU and the peripheral equipment.

5. An information processor as claimed in claim 4, wherein the common memory has a status area and an error status area holding status and error status information corresponding to various situations that can arise in the peripheral equipment, an address of the common memory appropriate to a particular situation being accessed from the peripheral equipment when that situation arises.

6. An information processor as claimed in any one of claims 2 to 5, wherein a speech synthesis system (73) is provided as a peripheral equipment.

7. An information processor as claimed in claim 6, wherein the speech synthesis system includes a magnetic bubble memory (7360) for storage of speech parameters.

8. An information processor as claimed in claim 7, wherein the magnetic bubble memory is provided in the form of a cassette.

## Patentansprüche

1. Informationsprozessor mit einer Vielzahl von Initialprogrammlader-(IPL)-Programmen (IPL1 bis IPL4), zur Ausführung durch eine zentrale Prozessoreinheit (CPU) des Prozessors, wenn der Betrieb der zentralen Prozessoreinheit initiiert wird, und die jeweils zum Laden der gewünschten Ausführungsprogramme in einen ersten Speicher (20) betreibbar sind, mit:

einem zweiten Speicher (30), der ein ROM ist und eine Vielzahl von IPL-Programmen eingespeichert hat, wobei einige Adreßanschlüsse (A0 bis A8) mit niedrigeren Adreßbits des zweiten Speichers mit der zentralen Prozessoreinheit über einen Adreßbus verbunden sind, und die zentrale Prozessoreinheit betreibbar ist, um die Adreßbits entsprechend den genannten einigen Adreßanschlüssen zu setzen,

einem IPL-Setzteil, zum Auswählen eines gewünschten der genannten Vielzahl von IPL-Programmen, einschließlich einer Vielzahl von Schaltern (302, 303), die in einer eins-zu-eins-Entsprrechung verbunden sind mit den verbleibenden Adreßanschlüssen (A9, A10), mit höheren Adreßbits, des zweiten Speichers, wobei der IPL-Setzteil betreibbar ist, um Adreßbits zu setzen, die den genannten verbleibenden Adreßanschlüssen entsprechen, unabhängig von Adreßsignalen, die von der zentralen Prozessoreinheit ausgesendet wurden, und unabhängig von dem Betrieb der zentralen Prozessoreinheit;

und einem gemeinsamen Datenbus (305, 301) für die zentrale Prozessoreinheit, den ersten Speicher (20) und den zweiten Speicher (30), wobei Ausgänge des zweiten Speichers (30) mit dem gemeinsamen Datenbus (305, 301) verbunden sind.

2. Informationsprozessor nach Anspruch 1, bei dem die Zahl der genannten Schalter (302, 303) und die Zahl der genannten oberen Adreßbitanschlüsse (A9, A10) der Zahl der peripheren Einrichtungen entspricht, die der Steuerung durch den Prozessor unterworfen sind.

3. Informationsprozessor nach Anspruch 2, bei dem die IPL-Programme den jeweiligen peripheren Einrichtungen entsprechen.

4. Informationsprozessor nach Anspruch 2 oder 3, bei dem die Kommunikation zwischen der CPU und einer peripheren Einrichtung mittels eines gemeinsamen Speichers (74, 74') hergestellt wird, durch welchen Befehlssignale, Statussignale, Fehlerstatussignale und Datensignale zwischen der CPU und der peripheren Einrichtung hindurchgeführt werden.

5. Informationsprozessor nach Anspruch 4, bei dem der gemeinsame Speicher einen Statusbereich und einen Fehlerstatusbereich hat, die Status- und Fehlerstatusinformation halten, entsprechend den verschiedenen Situationen, die in den peripheren Einrichtungen auftreten können, wobei zu einer Adresse des gemeinsamen Speichers, die für eine besondere Situation geeignet ist, von der peripheren Einrichtung zugegriffen werden kann, wenn diese Situation eintritt.

6. Informationsprozessor nach einem der Ansprüche 2 bis 5, bei dem ein Sprachsynthesesystem (73) als eine peripheren Einrichtung vorgesehen ist.

7. Informationsprozessor nach Anspruch 6, bei dem das Sprachsynthesesystem einen Magnetblasenspeicher (73, 60) zur Speicherung der Sprachparameter umfaßt.

8. Informationsprozessor nach Anspruch 7, bei dem der magnetische Blasenspeicher in Form einer Cassette vorgesehen ist.

## Revendications

1. Dispositif de traitement de l'information comportant un ensemble de programmes de chargeur de programme initial (IPL), (IPL1 à IPL4), pour l'exécution par une unité centrale de traitement (CPU) du processeur quand le fonctionnement de l'unité centrale de traitement est déclenché, et pouvant être rendus actifs respectivement pour charger des programmes d'exécution voulus dans une première mémoire (20), comprenant:

une deuxième mémoire (30) qui est une mémoire morte ROM et qui mémorise l'ensemble des programmes de chargeur IPL, certaines bornes d'adresse ($A_0$ à $A_8$) à bits d'adresse de poids faible de la deuxième mémoire étant connectées à l'unité centrale de traitement par l'intermédiaire d'un bus d'adresse, l'unité centrale de traitement pouvant être mise en fonctionnement pour établir les bits d'adresse correspondant auxdites certaines bornes d'adresse,

une partie d'établissement de chargeur IPL, pour sélectionner un programme voulu de l'ensemble de programmes de chargeur IPL, incluant un ensemble de commutateurs (302, 303) connectés en correspondance univoque avec les autres bornes d'adresse ($A_9$, $A_{10}$) à bits d'adresse de poids fort de la deuxième mémoire (30), la partie d'établissement de chargeur IPL pouvant être mise en fonctionnement pour établir les bits d'adresse correspondant aux autres bornes d'adresse, indépendamment des signaux d'adresse émis par l'unité centrale de traitement et indépendamment du fonctionnement de l'unité centrale de traitement,

et un bus de données commun (305, 301) pour l'unité centrale de traitement, la première mémoire (20) et la deuxième mémoire (30), les sorties de la deuxième mémoire (30) étant connéctées au bus de données commun (305, 301).

2. Dispositif de traitement de l'information selon la revendication 1, dans lequel le nombre des commutateurs (302, 303) et le nombre des bornes d'adresse à bits d'adresse de poids fort ($A_9$, $A_{10}$), correspondent au nombre de matériels périphériques soumis à la commande du processeur.

3. Dispositif de traitement de l'information selon la revendication 2, dans lequel les programmes de chargeur IPL correspondent à des matériels périphériques respectifs.

4. Dispositif de traitement de l'information selon l'une quelconque des revendications 2 et 3, dans lequel un échange est établi entre l'unité CPU et un matériel périphérique au moyen d'une mémoire commune (74, 74') par laquelle passent des signaux de commandes, des signaux d'état, des signaux d'état erroné et des signaux de données entre l'unité CPU et le matériel périphérique.

5. Dispositif de traitement de l'information selon la revendication 4, dans lequel la mémoire commune comporte une zone d'état et une zone d'état erroné contenant des informations d'état et d'état erroné correspondant à différentes situations qui peuvent se produire dans le matériel périphérique, une adresse de la mémoire commune appropriée à une situation particulière étant atteinte par le matériel périphérique quand cette situation se produit.

6. Dispositif de traitement de l'information selon l'une quelconque des revendications 2 à 5, dans lequel un système de synthèse de la parole (73) est prévu comme matériel périphérique.

7. Dispositif de traitement de l'information selon la revendication 6, dans lequel le système de synthèse de la parole comprend une mémoire à bulles magnétiques (7360) pour mémoriser des paramètres de parole.

8. Dispositif de traitement de l'information selon la revendication 7, dans lequel la mémoire à bulles magnétiques est prévue sous la forme d'une cassette.

Fig. 1

*F i g.  2*

Fig. 3

```
                    ┌──────────┐
                    │   IPL    │
                    └──────────┘
                         │
    ┌────────────────────────────────────────┐
    │ AN OPERATOR SETS ON A CONSOLE           │
    │   WHICH OF OS'S IS TO BE USED.          │
    └────────────────────────────────────────┘
                         │
                      ╱──────╲        YES
                     ╱  OS 1  ╲──────────────────────────┐
                     ╲        ╱                          │
                      ╲──────╱                           │
                       │ NO                              │
                      ╱──────╲        YES                │
                     ╱  OS 2  ╲──────────────┐           │
                     ╲        ╱              │           │
                      ╲──────╱               │           │
                       │ NO                  │           │
                      ╱──────╲    YES        │           │
                     ╱  OS 3  ╲──────┐       │           │
                     ╲        ╱      │       │           │
                      ╲──────╱       │       │           │
                       │ NO          ▼       ▼           ▼
                       │         ┌──────┐ ┌──────┐   ┌──────┐
                       │         │ OS 3 │ │ OS 2 │   │ OS 1 │
                       │         └──────┘ └──────┘   └──────┘
```

Fig. 4A

0 055 553

Fig. 4B

*Fig. 5*

```
            20
0000 ┌────RAM┐
     │        │
     │  OS    │
     │ RESI-  │
     │ DENT   │
     │ AREA   │
8000 ├────────┤
     │        │
     │        │
        30              30              30              30
FEOO ├────ROM┤ - - - ┌────ROM┐ - - ┌────ROM┐ - - ┌────ROM┐
     │ IPL 1  │       │ IPL 2  │     │ IPL 3  │     │ IPL 4  │
FFFF └(512BYTE)- - - - └(512BYTE)- - └(512BYTE)- - └(512BYTE)┘

SWITCH
  302   ON          ON          OFF         OFF
  303   ON          OFF         ON          OFF
```

# Fig. 6

PRESET WHICH OS
IS TO BE SELECTED

IPL 1     IPL 2     IPL 3     IPL 4

OS 1     OS 2     OS 3     OS 4

Fig. 7

7

Fig. 8

Fig. 9

Fig. 10

Fig. 11

73

*F i g.  12*

*Fig. 13*

## Fig. 14

SPEECH SYTHETIC CONTROL 7331

INTERFACE 7332

7310 D

ADDRESS COUNTER 7352A

DATA BUFFER 7352B

7352

MPX 2

MPX 1